# EUROPEAN PATENT APPLICATION

(11) **EP 4 746 120 A1**
(43) Date of publication of application: **20.05.2026**
(21) Application number: 24212667.0
(22) Date of filing: 13.11.2024
(51) Int. Cl.: H01M 10/613, H01M 10/625, H01M 10/6566, H01M 10/6556

(54) **A BATTERY MODULE AND A SYSTEM COMPRISING A BATTERY MODULE**

(71) Applicant: Echandia Marine AB, 171 73 Solna (SE)
(72) Inventor: Khajehvandi, Ali, 171 73 Solna (SE)
(74) Representative: Groth & Co. KB

(57) **Abstract**

A battery module (1) is disclosed, comprising a housing (2) comprising one or more surface structures (3, 4, 5, 6, 7) enclosing an interior space (10), wherein the housing is configured to accommodate one or more battery elements (11) within a part of the interior space (10). The housing (2) has at least one through-hole (15, 16, 17, 18) extending between an outer surface (12) of a portion of at least one of the surface structure(s) (3, 4, 5, 6, 7) and an inner surface (13) of the said portion of the at least one of the surface structure(s) (3, 4, 5, 6, 7) and opening into the interior space (10). The housing (2) comprises a thermal energy transfer element or is connected to a thermal energy transfer element (19) located at or in a portion of at least one of the surface structure(s) (3, 4, 5, 6, 7).

## Description

### TECHNICAL FIELD

The present invention generally relates to the field of electrical energy storage. More specifically, the present invention relates to a battery module having application in, e.g., maritime applications, and a system comprising such a battery module.

### BACKGROUND

Battery-powered vehicles, e.g., offshore vehicles which may be used in maritime applications, may rely on high-performance batteries for operation. During operation of such vehicles, a substantial amount of thermal energy may be generated in the batteries. Unless there is provided an effective mechanism for cooling the batteries during operation of the vehicles, detrimental effects to the batteries, such as reduced efficiency and/or faster degradation of the batteries, might occur. Possibly, even potential safety hazards might occur as a result of an insufficient cooling of the batteries during operation of the vehicles.

### SUMMARY

In view of the above, a concern of the present invention is to provide a battery module which facilitates or enables for a relatively high transport of any heat generated by the battery module in operation away from the battery module, to thereby achieve a relatively efficient cooling of the battery module when in operation.

To address at least one of this concern and other concerns, a battery module in accordance with the independent claim is provided. Preferred embodiments are defined by the dependent claims.

According to a first aspect of the present invention, a battery module is provided. The battery module comprises a housing comprising one or more (e.g., interconnected) surface structures enclosing (and possibly defining) an interior space. The housing is configured to accommodate one or more battery elements within a part of the interior space.

The housing has at least one through-hole extending between an outer surface of a portion of at least one of the surface structure(s) and an inner surface of the said portion of the at least one of the surface structure(s) and opening into the interior space. The interior space may be arranged to permit a flow of a fluid, upon entering the interior space via the at least one through-hole, through at least a part of the interior space so as to pass by the one or more battery elements and subsequently into at least one of the through-hole(s). Thereby, the interior space and the at least one through-hole may be capable of causing a flow of the fluid into the interior space, through at least a part of the interior space so as to pass by the one or more battery elements, and out of the interior space via at least one of the through-hole(s).

The housing comprises a thermal energy transfer element or is connected to a thermal energy transfer element comprised in the battery module. In the latter case, the thermal energy element may be considered as being comprised in the battery module. The thermal energy transfer element is located at or in a portion of at least one of the surface structure(s). The thermal energy transfer element may be configured so that thermal energy (e.g., any thermal energy) originating from within the interior space can be transferred through the said portion of the at least one of the surface structure(s) (that is, through the said portion of the at least one of the surface structure(s) at or in the thermal energy transfer element is located) via the thermal energy transfer element, away from the battery module with a higher thermal energy transfer rate compared to that of any transfer of thermal energy originating from within the interior space through at least one other portion of the surface structure(s).

In many applications, the fluid may typically be or comprise air and/or another type of gas, but it is contemplated that in accordance with one or more embodiments of the present invention, the fluid could be or comprise a liquid.

By the configuration of the housing with at least one through-hole, a relatively high transport of any heat generated by the battery module in operation away from the battery module may be facilitated or enabled. This is due to that by the interior space and the at least one through-hole being capable of causing a flow of the fluid into the interior space, through at least a part of the interior space so as to pass by the one or more battery elements, and out of the interior space via at least one of the through-hole(s), a relatively high transport of any heat generated by the one or more battery elements, by means of heat transfer by natural convection or forced convection (e.g., by means of a fan or pump), e.g., via flow of air, may be achieved. As the fluid may typically be or comprise air, this heat transfer mechanism of the battery module may be referred to as an air-cooling mechanism.

As mentioned, the thermal energy transfer element may be configured so that thermal energy originating from within the interior space can be transferred through the said portion of the at least one of the surface structure(s) via the thermal energy transfer element, away from the battery module with a higher thermal energy transfer rate compared to that of any transfer of thermal energy originating from within the interior space through at least one other portion of the surface structure(s). By such a configuration, an element or component of the battery module, e.g., of the housing, may be adapted such that a larger thermal energy transfer away from the battery module can be achieved via that element or component, which is located at or in a portion of at least one of the surface structure(s), as compared to via other portions of the surface structure(s). Thus, by the configuration of the housing comprising a thermal energy transfer element or with the housing being connected to a thermal energy transfer element comprised in the battery module, a relatively high transport of any heat generated by the battery module in operation away from the battery module may be facilitated or enabled.

In view of the above, by the configuration of the battery module according to the first aspect, any heat, e.g., generated by the battery module in operation, may be transferred away from the battery module by means of a combination of two heat transfer mechanisms. Specifically, this may entail heat transfer by natural or forced convection, and further by means of heat transfer through the at least one of the surface structure(s) of the housing. Therefore, by means of the configuration of the battery module according to the first aspect, a relatively high transport of any heat generated by the battery module in operation away from the battery module may be facilitated or enabled. In turn, a relatively efficient cooling of the battery module when in operation may be achieved.

In the context of the present application, by transfer of thermal energy with a certain thermal energy transfer rate, it may be meant the amount of thermal energy transferred via (e.g., from) the thermal energy transfer element (e.g., over an outer surface thereof) per unit of time.

The thermal energy transfer element may be configured so that thermal energy originating from within the interior space can be transferred through the said portion of the at least one of the surface structure(s) via an outer surface of the thermal energy transfer element, away from the battery module.

As indicated in the foregoing, the thermal energy transfer element may be an element or component which may be comprised in the housing or be connected to the housing. The thermal energy transfer element may be connected to the housing partly or entirely by means of an adhesive. Preferably, such an adhesive may comprise thermal interface material(s). The thermal energy transfer element could in alternative or in addition be connected to the housing for example by means of screws or the like.

Possibly, the thermal energy transfer element has an outer surface which may face away from an inner surface of the said portion of the at least one of the surface structure(s).

As mentioned, the housing is configured to accommodate one or more battery elements within a part of the interior space. In this context, by a part of the interior space it may be meant a (or the) part of the interior space that is not occupied by the one or more battery elements.

As mentioned, the housing is configured to accommodate one or more battery elements within a part of the interior space. In this context, by one or more battery elements, it may be meant in principle any element or component of the battery module other than the housing. Specifically, by one or more battery elements, it may be meant one or more batteries, one or more battery cells, one or more auxiliary elements for one or more batteries, and/or one or more battery cells, etc. The one or more battery elements may include one or more printed circuit boards and/or one or more battery management system circuits. The one or more batteries may comprise batteries of various types including but not limited to lithium-ion batteries.

The battery module may be adapted so that it can be positioned together with other battery module(s) for example in a cabinet and/or in a rack or the like.

As mentioned, the interior space and the at least one through-hole may be capable of causing a flow of the fluid into the interior space, through at least a part of the interior space so as to pass by the one or more battery elements, and out of the interior space via at least one of the through-hole(s). Thus, one or more embodiments of the present invention encompass the case where the flow of the fluid into the interior space and the flow of the fluid out of the interior space may occur via the same through-hole. Thus, according to one or more embodiments of the present invention, the housing of the battery module could be provided with a single through-hole. However, according to one or more embodiments of the present invention, the housing may have a plurality of through-holes, and the flow of the fluid into the interior space and the flow of the fluid out of the interior space may then occur via different through-holes.

For the case where the housing has a plurality of through-holes, one or more first through-holes of the plurality of through-holes may extend between an outer surface of a first portion of at least one of the surface structure(s) and an inner surface of the said first portion of the at least one of the surface structure(s) and opening into the interior space, and one or more second through-holes of the plurality of through-holes may extend between an inner surface of a second portion of at least one of the surface structure(s) and an outer surface of the said second portion of at least one of the surface structure(s) and opening into the exterior of the housing. The said first portion may be different from the said second portion. Thus, the first through-holes may be different from the second through-holes. The interior space may be arranged to permit a flow of the fluid, upon entering the interior space via the one or more first through-holes, through at least a part of the interior space so as to pass by the one or more battery elements and subsequently into the one or more second through-holes. Thereby, the interior space and the one or more first through-holes and the one or more second through-holes may be capable of causing a flow of the fluid into the interior space, through at least a part of the interior space so as to pass by the one or more battery elements, and out of the interior space via the one or more first through-holes and the one or more second through-holes.

The one or more surface structures of the housing may comprise a bottom part or portion, a top part or portion, and one or more side parts or portions extending between the bottom part or portion and the top part or portion. The one or more first through-holes and the one or more second through-holes may be arranged in the one or more side parts or portions.

The one or more side parts or portions may comprise a front wall, a back wall and two side walls extending between the front wall and the back wall. The battery module may comprise an electrical interface, which may be located at an outer surface of the front wall. The electrical interface may be configured so as to be connected with the one or more battery elements when the one or more battery elements are accommodated within the interior space. The one or more first through-holes may be arranged in the front wall. The one or more second through-holes may be arranged in the back wall.

According to one or more embodiments of the present invention, the battery module, possibly together with other battery modules of the same or similar type, may be disposed in a cabinet and/or in a rack or the like. The front wall of the one or more side parts or portions of the housing's one or more surface structures may be a wall of the corresponding battery module that is exposed or accessible to a user when the battery module is disposed in the cabinet and/or in the rack or the like.

As mentioned, the interior space may be arranged to permit a flow of a fluid, upon entering the interior space via the at least one through-hole, through at least a part of the interior space so as to pass by the one or more battery elements and subsequently into at least one of the through-hole(s). For example, the interior space may be arranged to permit a flow of the fluid, upon entering the interior space via the at least one through-hole, through at least a part of the interior space so as to pass over or across one or more surfaces of the battery element(s), or possibly even through the battery element(s), depending on the particular configuration or design of the battery element(s).

The thermal energy transfer element may be configured so as to exhibit a larger thermal conductivity than the said at least one other portion of the surface structure(s). To that end, the thermal energy transfer element could for example be made of a material having a larger thermal conductivity than the material which the said at least one other portion of the surface structure(s) is made of. According to one or more embodiments of the present invention, the thermal energy transfer element may for example be made of aluminum (Al) or another or other metals exhibiting a similar or even higher thermal conductivity than Al, and the said at least one other portion of the surface structure(s) may be made of, e.g., plastics having a smaller thermal conductivity than Al or the other metal(s).

According to one or more embodiments of the present invention, the thermal energy transfer element may comprise or be constituted by a plate or a disc or the like, which may be comprised in the housing or be connected to the housing.

The thermal energy transfer element may comprise a plurality of fins, or ribs, and/or another type of similar elongated elements, and/or grooves, which may be arranged spaced apart from each other.

The plurality of fins or ribs or the like (and/or another type of similar elongated elements, and/or grooves) may be arranged on an outer surface of the thermal energy transfer element. The outer surface of the thermal energy transfer element may thereby be considered as being (e.g., in part) defined by the portions of the thermal energy transfer between the fins or ribs or the like.

According to one or more embodiments of the present invention, the one or more surface structures of the housing may comprise a bottom part or portion, a top part or portion, and one or more side parts or portions which may extend between the bottom part or portion and the top part or portion. The thermal energy transfer element may be located at or in the bottom part or portion. The thermal energy transfer element may comprise a plurality of fins, which may be arranged on an outer surface of the thermal energy transfer element and spaced apart from each other.

Each or any of the fins or ribs or the like and possibly any other part or portion of the thermal energy transfer element may be made entirely or in part of a material exhibiting a relatively high thermal conductivity, e.g., Al or another or other metals exhibiting a similar or even higher thermal conductivity than Al.

According to one or more embodiments of the present invention, the one or more surface structures of the housing may comprise a bottom part or portion, a top part or portion, and one or more side parts or portions which may extend between the bottom part or portion and the top part or portion. The one or more side parts or portions may comprise a front wall, a back wall and two side walls which may extend between the front wall and the back wall. The battery module may comprise an electrical interface which may be located at an outer surface of the front wall. The electrical interface may be configured so as to be connectable with an electrical conductor, and possibly further so as to be connected with the one or more battery elements when the one or more battery elements are accommodated within the interior space.

The outer surface of the front wall may be provided with a fastening element. The fastening element may be configured to releasably fasten a portion of an electrical conductor on or at the housing when the electrical conductor is connected with the electrical interface. This may be particularly advantageous in a system including several battery modules which are located relatively close to each other - such as if the battery modules are disposed in a cabinet and/or in a rack or the like - for facilitating handling of electrical conductors (e.g., electrical cables) connected to the electrical interfaces of respective ones of the battery modules.

The electrical interface may comprise a positive terminal and a negative terminal of the one or more battery elements.

The electrical interface may comprise a positive terminal and a negative terminal which may be associated with the one or more battery elements. For example, the positive terminal and the negative terminal of the electrical interface may not be the actual positive terminal and the negative terminal of the one or more battery elements, but may rather be connected to the actual positive terminal and the negative terminal of the one or more battery elements. The positive terminal and the negative terminal of the electrical interface may be corresponding to the actual positive terminal and negative terminal, respectively, of the one or more battery elements.

The battery module may comprise protective covers for the positive terminal and the negative terminal, respectively. The protective covers may be configured to be selectively operable (e.g., by a user) for exposing or covering the positive terminal and the negative terminal, respectively. The protective covers may be colored red and black, or with some other colors, according to standards for indicating positive and negative terminals on batteries or possibly on electrical components in general.

According to a second aspect of the present invention, a system is provided. The system comprises a battery module according to the first aspect of the present invention. The system comprises at least one of: at least one heat sink, at least one heat spreader, and at least one heat exchanger. An outer surface of the thermal energy transfer element of the battery module may be coupled with the at least one heat sink, the at least one heat spreader, and/or the at least one heat exchanger.

The thermal energy transfer element may be configured so that the outer surface of the thermal energy transfer element is adapted to mate with a surface of the at least one heat sink, the at least one heat spreader, and/or the at least one heat exchanger. By such a configuration, the shape of the outer surface of the thermal energy transfer element may be corresponding or conforming to, or matching with, the surface of the at least one heat sink, the at least one heat spreader, and/or the at least one heat exchanger. Thereby, a relatively high efficiency of transferring thermal energy from the thermal energy transfer element to the at least one heat sink, the at least one heat spreader, and/or the at least one heat exchanger may be achieved. In alternative or in addition, thermal interface material between the outer surface of the thermal energy transfer element and the surface of the at least one heat sink, the at least one heat spreader, and/or the at least one heat exchanger may be provided, by means of which a relatively high efficiency - or an even higher efficiency - of transferring thermal energy from the thermal energy transfer element to the at least one heat sink, the at least one heat spreader, and/or the at least one heat exchanger may be achieved.

The system may comprise a fluid flow generator configured to selectively generate the flow of the fluid into the interior space. The fluid flow generator may comprise one or more fans, one or more pumps, and/or another appropriate type of fluid flow generator.

The system may comprise a plurality of battery modules, where each battery module may be in accordance with the first aspect of the present invention. According to one or more embodiments of the present invention, the battery modules may be disposed in a cabinet and/or in a rack or the like. The rack may be arranged in the cabinet. For each battery module of the plurality of battery modules, there may be a provided a corresponding at least one heat sink, at least one heat spreader, and/or at least one heat exchanger. For each battery module of the plurality of battery modules, the outer surface of the thermal energy transfer element of the battery module may be coupled with the corresponding at least one heat sink, at least one heat spreader, and/or at least one heat exchanger.

Further objects and advantages of the present invention are described in the following by means of exemplifying embodiments. It is noted that the present invention relates to all possible combinations of features recited in the claims. Further features of, and advantages with, the present invention will become apparent when studying the appended claims and the description herein. Those skilled in the art realize that different features of the present invention can be combined to create embodiments other than those described herein.

### BRIEF DESCRIPTION OF THE DRAWINGS

Exemplifying embodiments of the invention will be described below with reference to the accompanying drawings.
Fig. 1 is a schematic, in part sectional side view of a system according to an embodiment of the present invention.
Fig. 2 is a perspective view of a battery module according to an embodiment of the present invention. According to the embodiment of the present invention illustrated in Fig. 2, the one or more surface structures of the battery module's housing comprise a bottom part or portion, a top part or portion, and one or more side parts or portions extending between the bottom part or portion and the top part or portion, and with the one or more side parts or portions comprising a front wall, a back wall and two side walls extending between the front wall and the back wall.
Fig. 3 is a view of front wall of the battery module illustrated in Fig. 2.
Fig. 4 is a view of back wall of the battery module illustrated in Fig. 2.
Fig. 5 is a view of one of the side walls of the battery module illustrated in Fig. 2.
Fig. 6 is a view of the bottom part or portion of the battery module illustrated in Fig. 2, from the above of the bottom part or portion.

All the figures are schematic, not necessarily to scale, and generally only show parts which are necessary in order to elucidate embodiments of the present invention, wherein other parts may be omitted or merely suggested.

### DESCRIPTION WITH REFERENCE TO THE DRAWINGS

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

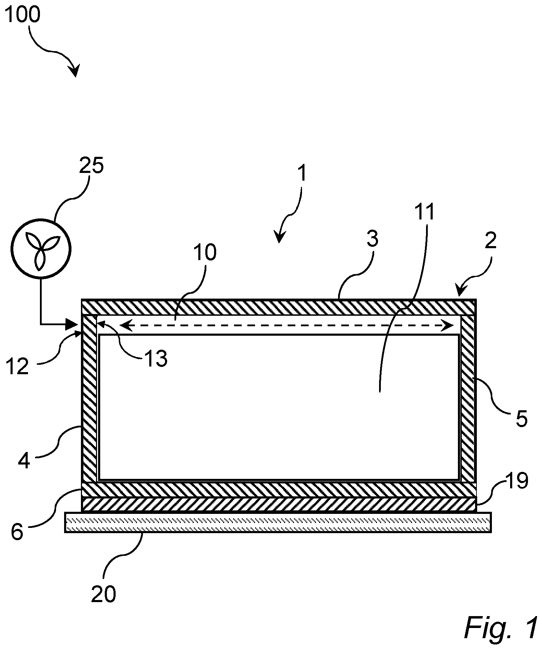

Fig. 1 is a schematic, in part sectional side view of a system 100 according to an embodiment of the present invention. The system 100 comprises a battery module 1, which comprises a housing 2. The housing 2 comprises one or more surface structures which are enclosing an interior space 10. The housing 2 is configured to accommodate one or more battery elements, schematically indicated a 11, within a part of the interior space 10.

In accordance with the embodiment of the present invention illustrated in Fig. 1, the battery module's 1 housing 2 comprises a bottom part or portion 6, a top part or portion 3, and side parts or portions 4 and 5 each of which extends between the bottom part or portion 6 and the top part or portion 3. Thereby, in accordance with the embodiment of the present invention illustrated in Fig. 1, the one or more surface structures comprise the bottom part or portion 6, the top part or portion 3, and the side parts or portions 4 and 5.

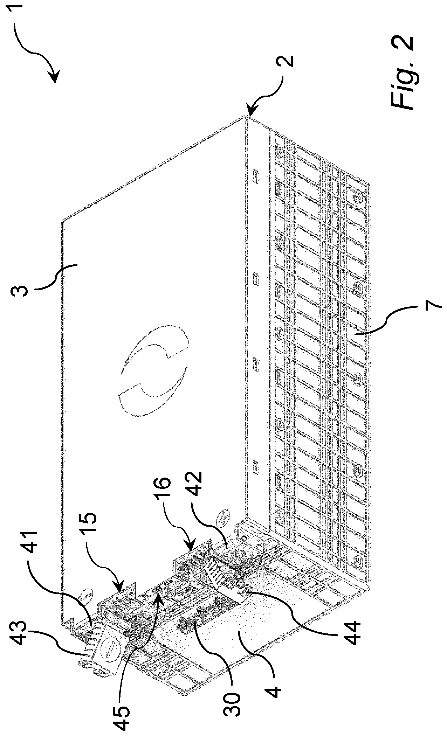

The housing 2 has at least one through-hole (not shown in Fig. 1; cf. Figs. 2-4) extending between an outer surface 12 of a portion of at least one of the surface structure(s) (in the illustrated embodiment of the present invention, the outer surface 12 is of a portion of the side part or portion 4) and an inner surface 13 of the said portion of the at least one of the surface structure(s) and opening into the interior space 10. The interior space 10 is arranged to permit a flow of a fluid, upon entering the interior space 10 via the at least one through-hole, through at least a part of the interior space 10 so as to pass by the one or more battery elements 11 and subsequently into at least one of the through-hole(s). Thereby, the interior space 10 and the at least one through-hole are capable of causing a flow of the fluid into the interior space 10, through at least a part of the interior space 10 so as to pass by the one or more battery elements 11, and out of the interior space 10 via at least one of the through-hole(s). According to the embodiment of the present invention illustrated in Fig. 1, the flow of the fluid is through an upper part of the interior space 10 so as to pass by the one or more battery elements 11, which are occupying a lower part of the interior space 10, and may exit the interior space 10 via at least one of the through-hole(s). The flow of the fluid through the interior space 10 is illustrated in Fig. 1 by the double-ended dashed arrow in Fig. 1. As indicated in Fig. 1, the (e.g., lower) part of the interior space 10, in which the one or more battery elements 11 may be accommodated, may be (e.g., significantly) larger than the (e.g., upper) part of the interior space 10 wherein the flow of the fluid may occur.

In accordance with the embodiment of the present invention illustrated in Fig. 1, the system 100 may comprise a fluid flow generator, schematically indicated at 25 in Fig. 1, which fluid flow generator 25 may be configured to selectively generate the flow of the fluid into the interior space 10. The flow of fluid generated by the fluid flow generator 25 into the interior space 10 is indicated in Fig. 1 by the solid arrow originating from the fluid flow generator 25. The fluid flow generator 25 may comprise a fan. The fluid flow generator 25 may be configured to generate a flow of air (and/or another type of gas) into the interior space 10. The fluid flow generator 25 may be controllable with respect to operation thereof, e.g., so as to controllably provide a selected amount of fluid per unit of time (e.g., air and/or another gas) into the interior space 10.

In accordance with the embodiment of the present invention illustrated in Fig. 1, the housing 2 is connected to a thermal energy transfer element 19 comprised in the battery module. In alternative, the housing 2 could comprise a thermal energy transfer element. As illustrated in Fig. 1, the thermal energy transfer element 19 is located at or in a portion of at least one of the surface structure(s). In accordance with the embodiment of the present invention illustrated in Fig. 1, the thermal energy transfer element 19 is located at (e.g., a portion of) the bottom part or portion 6. The thermal energy transfer element 19 is configured so that thermal energy originating from within the interior space 10 (e.g., by operation of the one or battery elements 11) can be transferred through the said portion of the at least one of the surface structure(s), via the thermal energy transfer element 19, away from the battery module 1 with a higher thermal energy transfer rate compared to that of any transfer of thermal energy originating from within the interior space 10 through at least one other portion of the surface structure(s). In accordance with the embodiment of the present invention illustrated in Fig. 1, by the thermal energy transfer element 19, thermal energy originating from within the interior space 10 can be transferred through the (e.g., a portion of) the bottom part or portion 6 via the thermal energy transfer element 19, away from the battery module 1 with a higher thermal energy transfer rate compared to that of any transfer of thermal energy originating from within the interior space 10 through other portions of the surface structure(s), e.g., the top part or portion 3 and the side parts or portions 4 and 5. To that end, the thermal energy transfer element 19 might be configured so as to exhibit a larger thermal conductivity than the other portions of the surface structure(s). For example, the thermal energy transfer element 19 could be made of aluminum (Al) or another or other metals exhibiting a similar or even higher thermal conductivity than Al, whereas the one other portions of the surface structure(s) may be made of, e.g., plastics having a smaller thermal conductivity than Al or the other metal(s).

The system 100 comprises a component 20 which may comprise at least one heat sink, at least one heat spreader, and/or at least one heat exchanger. As illustrated in Fig. 1, an outer surface of the thermal energy transfer element 19 is coupled with the component 20. Possibly, the outer surface of the thermal energy transfer element 19 may be coupled with the component 20 via one or more thermal interface materials.

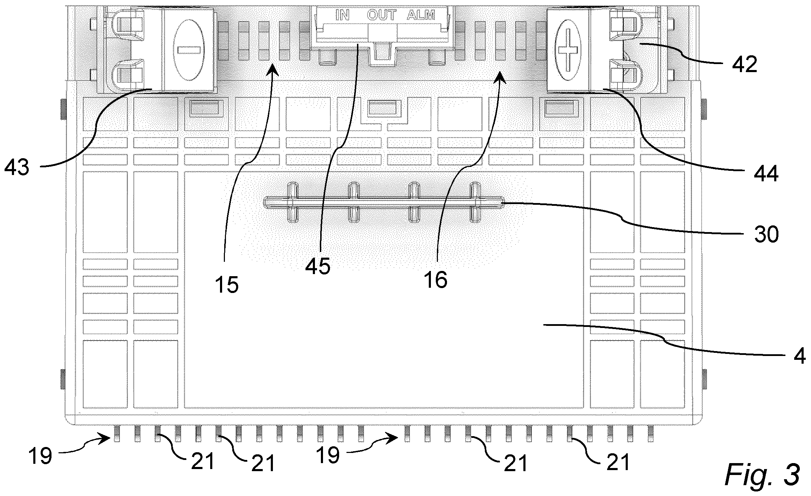

In accordance with the embodiment of the present invention illustrated in Fig. 1, the thermal energy transfer element 19 comprises or is constituted by a plate or a disc or the like, which may have two major surfaces facing the bottom part or portion 6 and the component 20, respectively, and which plate or the disc or the like may be connected to the housing 2. The major surfaces of the plate or the disc or the like may be flat or substantially flat. It is however to be understood that other configurations of the thermal energy transfer element are possible. According to another possible configuration, the thermal energy transfer element may be comprised in the housing 2 (e.g., integrated in the housing 2). According to another possible configuration illustrated in Figs. 3-6 and described further in the following, the thermal energy transfer element may comprise a plurality of fins arranged spaced apart from each other, wherein the plurality of fins may be arranged on an outer surface of the thermal energy transfer element.

In accordance with the embodiment of the present invention illustrated in Fig. 1, the system 100 comprises one battery module 1. It is however to be understood that the system 100 might comprise a plurality of battery modules, each of which may be configured in accordance with an embodiment of the present invention, e.g., similarly or the same as the battery module 1 illustrated in Fig. 1 or the battery module 1 illustrated in Figs. 2-6. Such a plurality of battery modules could be disposed in a cabinet and/or in a rack or the like (not shown in Fig. 1). In case the system 100 would comprise a plurality of battery modules, there may - for each battery module of the plurality of battery modules - be provided a corresponding at least one heat sink, at least one heat spreader, and/or at least one heat exchanger. For each battery module, the outer surface of the thermal energy transfer element of the battery module may be coupled with the corresponding at least one heat sink, at least one heat spreader, and/or at least one heat exchanger.

Fig. 2 is a perspective view of a battery module 1 according to an embodiment of the present invention. The battery module 1 illustrated in Fig. 2 is similar to the battery module 1 illustrated in Fig. 1, and the same reference numerals in Figs. 1 and 2 represent the same or similar components, having the same or similar function or functionality.

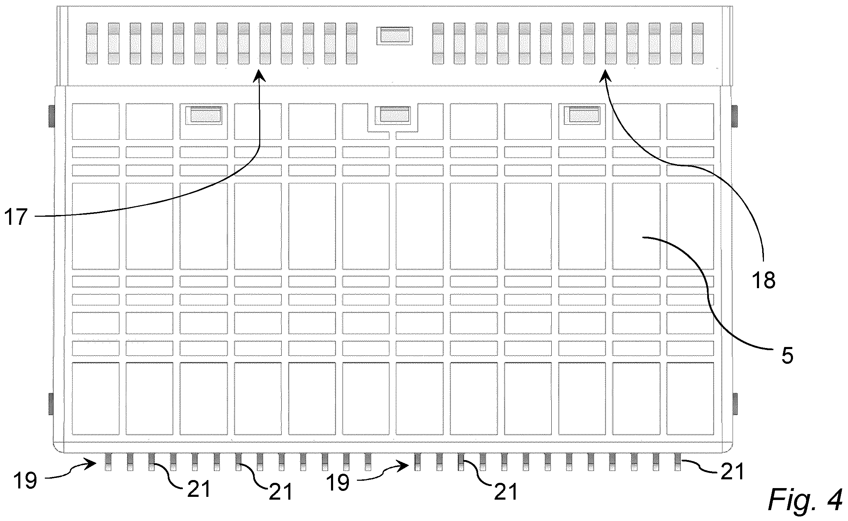

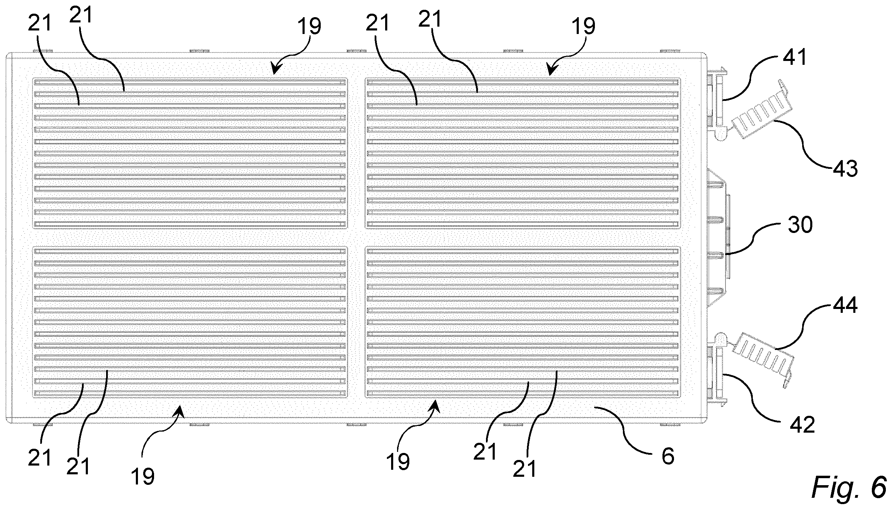

Similarly to the battery module 1 illustrated in Fig. 1, the battery module 1 illustrated in Fig. 2 has a housing 2 comprising a bottom part or portion (not shown in Fig. 2, cf. Fig. 6), a top part or portion 3, and side parts or portions extending between the bottom part or portion 3 and the top part or portion, some of which side parts or portions are indicated by reference numerals 4 and 7 in Fig. 2. In accordance with the embodiment of the present invention illustrated in Fig. 2, the side parts or portions comprise a front wall 4, a back wall (not shown in Fig. 2; cf. Fig. 4) and two side walls extending between the front wall 4 and the back wall. One of the side walls is shown in Fig. 2 and is indicated by reference numeral 7 in Fig. 2.

Fig. 3 is a view of the front wall 4 of the battery module illustrated in Fig. 2.

Fig. 4 is a view of the back wall of the battery module illustrated in Fig. 2. The back wall is indicated by reference numeral 5 in Fig. 4.

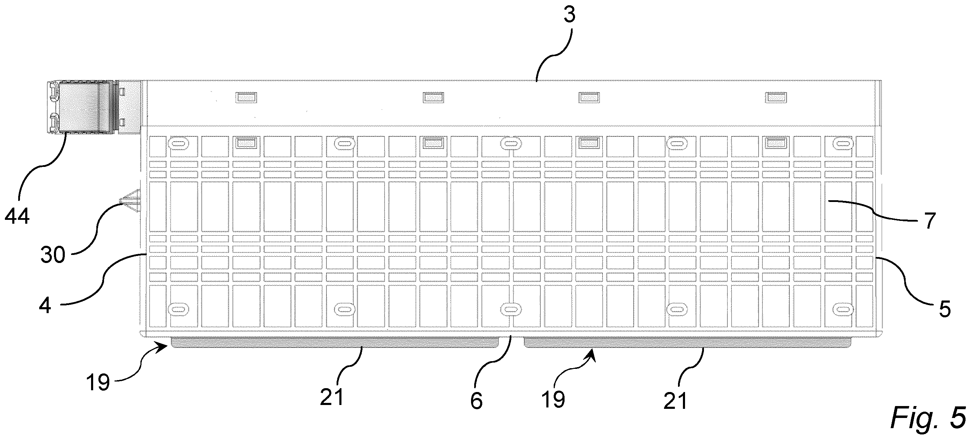

Fig. 5 is a view of the side wall 7 of the battery module illustrated in Fig. 2. The side wall of the battery module which is opposite to the side wall 7 of the battery module shown in Fig. 2 and which is not shown in the figures may be configured similarly or the same as the side wall 7.

Fig. 6 is a view of the bottom part or portion of the battery module illustrated in Fig. 2 as seen from the above of an outer surface of the bottom part or portion. The bottom part of portion is indicated by reference numeral 6 in Fig. 6.

The same reference numerals in Figs. 2-6 represent the same or similar components, having the same or similar function or functionality.

With further reference to Figs. 2-4, in accordance with the illustrated embodiment, the housing 2 has a plurality of through-holes 15, 16, 17, 18. In accordance with the illustrated embodiment, each of the through-holes is formed to exhibit a slot-like shape, and are spaced apart from each other and equidistantly (or substantially equidistantly) arranged. It is to be understood that these particular designs of the through-holes with regard to shape and/or arrangement in relation to each other are exemplifying and not limiting, and that other shapes and/or arrangements in relation to each other are possible. In the figures, each of the reference numerals 15, 16, 17 and 18, respectively, indicate several ones of the through-holes. It is to be understood that the number of the through-holes as illustrated in the figures is exemplifying and not limiting. While it may be preferred for the housing 2 to have several through-holes, the housing may, as has already been mentioned, have only a single through-hole. While the plurality of through-holes may be referred to herein as the plurality of through-holes 15, 16, 17, 18, this does not impart any limitation on the number of through-holes which may be provided in the housing 2.

In accordance with the illustrated embodiment, of the plurality of through-holes 15, 16, 17, 18, there are (i) first through-holes 15, 16 which extend between an outer surface of a first portion of at least one of the surface structure(s) and an inner surface of the said first portion of the at least one of the surface structure(s) and opening into the interior space 10, and (ii) second through-holes 17, 18 of the which extend between an inner surface of a second portion of at least one of the surface structure(s) and an outer surface of the said second portion of at least one of the surface structure(s) and opening into the exterior of the housing 2. The said first portion is different from the said second portion, and in accordance with the illustrated embodiment, the said first portion is a portion of the front wall 4 and the said second portion is a portion of the back wall 5. Thus, in accordance with the illustrated embodiment, the first through-holes 15, 16 are arranged in the front wall 4 and the second through-holes 17, 18 are arranged in the back wall 5. It is however to be understood that the said first portion does not necessarily have to be a portion of the front wall 4 and that the said second portion does not necessarily have to be a portion of the back wall 5. Thus, the first through-holes 15, 16 do not necessarily have to be arranged in the front wall 4 and the second through-holes 17, 18 do not necessarily have to be arranged in the back wall 5.

The interior space 10 is arranged to permit a flow of the fluid, upon entering the interior space 10 via the first through-holes 15, 16, through at least a part of the interior space 10 so as to pass by the one or more battery elements 11 and subsequently into the second through-holes 17, 18. Thereby, the interior space 10 and the first through-holes 15, 16 and the second through-holes 17, 18 may be capable of causing a flow of the fluid into the interior space 10, through at least a part of the interior space 10 so as to pass by the one or more battery elements 11, and out of the interior space 10 via the first through-holes 15, 16 and the second through-holes 17, 18. The flow of the fluid may be such that it enters the interior space 10 via the first through-holes 15, 16 and exits the interior space 10 via the second through-holes 17, 18, or such that it enters the interior space 10 via the second through-holes 17, 18 and exits the interior space 10 via the first through-holes 15, 16.

As perhaps best illustrated in Figs. 2 and 3, the battery module 1 may comprise an electrical interface 41, 42 which may be located at an outer surface of the front wall 4. The electrical interface may be configured so as to be connected with the one or more battery elements 11 when the one or more battery elements 11 are accommodated within the interior space 10. In accordance with the illustrated embodiment, the electrical interface 41, 42 comprises a positive terminal 42 and a negative terminal 41 of or being associated with the one or more battery elements 11. As illustrated in Figs. 2 and 3, the battery module 1 may comprise protective covers 43 and 44 for the negative terminal 41 and the positive terminal 42, respectively. The protective covers 43 and 44 may be configured to be selectively operable (e.g., by a user) for exposing or covering the negative terminal 41 and the positive terminal 42, respectively.

The one or more battery elements 11 may include one or more battery management system circuits and/or another or other types of circuits. As illustrated in Figs. 2 and 3, there may be provided an input/output interface 45 which may be located at an outer surface of the front wall 4. The input/output interface 45 may permit conveying signaling, data, messages, etc., between the one or more battery elements 11 - e.g., one or more battery management system circuits thereof - and another entity (not shown in the figures) that may be externally arranged with respect to the battery module 1. By the input/output interface 45, control signaling, data, messages, etc., could be conveyed to the one or more battery elements 11 for controlling operation thereof, and/or signaling, data, messages, etc., such as being indicative of the operational status the one or more battery elements 11 could be conveyed to the said entity that may be externally arranged with respect to the battery module 1. The said entity that may be externally arranged with respect to the battery module 1 could therefore possibly be a controller configured to control operation of the one or more battery elements 11. The input/output interface 45 could therefore also be considered as an electrical interface, just as the positive terminal 42 and the negative terminal 41.

As perhaps best illustrated in Figs. 2 and 3, the outer surface of the front wall 4 may be provided with a fastening element 30. The fastening element 30 may be configured to releasably fasten a portion of an electrical conductor (e.g., an electrical cable; not shown in the figures) on or at the housing 2 when the electrical conductor is connected with the electrical interface 41, 42 and/or the input/output interface 45.

With further reference to Figs. 3-6, in accordance with the illustrated embodiment, the housing 2 is connected to thermal energy transfer elements 19 comprised in the battery module 1. In alternative, the housing 2 could comprise thermal energy transfer elements. As illustrated in Figs. 3-6, the thermal energy transfer elements 19 are located at or in a portion of at least one of the surface structure(s). In accordance with the embodiment of the present invention illustrated in Fig. 1, the thermal energy transfer elements 19 are located at (e.g., a portion of) the bottom part or portion 6. The thermal energy transfer elements 19 are configured so that thermal energy originating from within the interior space 10 (e.g., by operation of the one or battery elements 11) can be transferred through the said portion of the at least one of the surface structure(s), via the thermal energy transfer elements 19, away from the battery module 1 with a higher thermal energy transfer rate compared to that of any transfer of thermal energy originating from within the interior space 10 through at least one other portion of the surface structure(s). In accordance with the embodiment of the present invention illustrated in Fig. 1, by the thermal energy transfer elements 19, thermal energy originating from within the interior space 10 can be transferred through the (e.g., a portion of) the bottom part or portion 6 via the thermal energy transfer elements 19, away from the battery module 1 with a higher thermal energy transfer rate compared to that of any transfer of thermal energy originating from within the interior space 10 through other portions of the surface structure(s), e.g., the top part or portion 3 and the side parts or portions 4 and 5.

In accordance with the embodiment of the present invention illustrated in Figs. 3-6, each of the thermal energy transfer elements 19 comprises a plurality of fins 21 which are arranged spaced apart from each other. As perhaps best illustrated in Fig. 6, for each of the thermal energy transfer elements 19, the fins 21 are arranged on an outer surface of the thermal energy transfer element 19.

It is to be noted that in the figures only some of the fins 21 are indicated by reference numerals. Also, while in accordance with the embodiment of the present invention illustrated in Figs. 3-6, the battery module 1 comprises four thermal energy transfer elements 19, it is to be understood that the battery module 1 may comprise fewer or more thermal energy transfer elements than what is illustrated. Also, it is to be understood that for each thermal energy transfer element 19, there may be fewer or more fins than what is illustrated.

In conclusion, a battery module is disclosed, comprising a housing comprising one or more surface structures enclosing an interior space, wherein the housing is configured to accommodate one or more battery elements within a part of the interior space. The housing has at least one through-hole extending between an outer surface of a portion of at least one of the surface structure(s) and an inner surface of the said portion of the at least one of the surface structure(s) and opening into the interior space. The housing comprises a thermal energy transfer element or is connected to a thermal energy transfer element located at or in a portion of at least one of the surface structure(s). A system comprising such a battery module is also disclosed.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A battery module (1) comprising:
a housing (2) comprising one or more surface structures (3, 4, 5, 6, 7) enclosing an interior space (10), wherein the housing is configured to accommodate one or more battery elements (11) within a part of the interior space;
wherein the housing has at least one through-hole (15, 16, 17, 18) extending between an outer surface (12) of a portion of at least one of the surface structure(s) and an inner surface (13) of the said portion of the at least one of the surface structure(s) and opening into the interior space, wherein the interior space is arranged to permit a flow of a fluid, upon entering the interior space via the at least one through-hole, through at least a part of the interior space so as to pass by the one or more battery elements and subsequently into at least one of the through-hole(s), whereby the interior space and the at least one through-hole are capable of causing a flow of the fluid into the interior space, through at least a part of the interior space so as to pass by the one or more battery elements, and out of the interior space via at least one of the through-hole(s);
wherein the housing comprises a thermal energy transfer element or is connected to a thermal energy transfer element (19) comprised in the battery module, the thermal energy transfer element being located at or in a portion of at least one of the surface structure(s), the thermal energy transfer element being configured so that thermal energy originating from within the interior space can be transferred through the said portion of the at least one of the surface structure(s), via the thermal energy transfer element, away from the battery module with a higher thermal energy transfer rate compared to that of any transfer of thermal energy originating from within the interior space through at least one other portion of the surface structure(s).

2. A battery module according to claim 1, wherein the housing has a plurality of through-holes (15, 16, 17, 18), wherein one or more first through-holes (15, 16) of the plurality of through-holes extend between an outer surface of a first portion of at least one of the surface structure(s) and an inner surface of the said first portion of the at least one of the surface structure(s) and opening into the interior space, and one or more second through-holes (17, 18) of the plurality of through-holes extend between an inner surface of a second portion of at least one of the surface structure(s) and an outer surface of the said second portion of at least one of the surface structure(s) and opening into the exterior of the housing, wherein the said first portion is different from the said second portion, wherein the interior space is arranged to permit a flow of the fluid, upon entering the interior space via the one or more first through-holes, through at least a part of the interior space so as to pass by the one or more battery elements and subsequently into the one or more second through-holes, whereby the interior space and the one or more first through-holes and the one or more second through-holes are capable of causing a flow of the fluid into the interior space, through at least a part of the interior space so as to pass by the one or more battery elements, and out of the interior space via the one or more first through-holes and the one or more second through-holes.

3. A battery module according to claim 2, wherein the one or more surface structures of the housing comprise a bottom part or portion (6), a top part or portion (3), and one or more side parts or portions (4, 5, 7) extending between the bottom part or portion and the top part or portion, wherein the one or more first through-holes and the one or more second through-holes are arranged in the one or more side parts or portions.

4. A battery module according to claim 3, wherein the one or more side parts or portions comprise a front wall (4), a back wall (5) and two side walls (7) extending between the front wall and the back wall, wherein the battery module comprises an electrical interface (41, 42, 45) located at an outer surface of the front wall, the electrical interface being configured so as to be connected with the one or more battery elements when the one or more battery elements are accommodated within the interior space, wherein the one or more first through-holes are arranged in the front wall and the one or more second through-holes are arranged in the back wall.

5. A battery module according to any one of claims 1-4, wherein the thermal energy transfer element is configured so as to exhibit a larger thermal conductivity than the said at least one other portion of the surface structure(s).

6. A battery module according to any one of claims 1-5, wherein the thermal energy transfer element comprises a plurality of fins (21) arranged spaced apart from each other.

7. A battery module according to claim 6, wherein the plurality of fins is arranged on an outer surface of the thermal energy transfer element.

8. A battery module according to any one of claims 1-2, wherein the one or more surface structures of the housing comprise a bottom part or portion (6), a top part or portion (3), and one or more side parts or portions (4, 5, 7) extending between the bottom part or portion and the top part or portion, and wherein the thermal energy transfer element is located at or in the bottom part or portion, and wherein the thermal energy transfer element comprises a plurality of fins (21) which are arranged on an outer surface of the thermal energy transfer element and spaced apart from each other.

9. A battery module according to any one of claims 1-2, wherein the one or more surface structures of the housing comprise a bottom part or portion (6), a top part or portion (3), and one or more side parts or portions (4, 5, 7) extending between the bottom part or portion and the top part or portion, wherein the one or more side parts or portions comprise a front wall (4), a back wall (5) and two side walls (7) extending between the front wall and the back wall, wherein the battery module comprises an electrical interface (41, 42, 45) located at an outer surface of the front wall, the electrical interface being configured so as to be connectable with an electrical conductor and further so as to be connected with the one or more battery elements when the one or more battery elements are accommodated within the interior space.

10. A battery module according to claim 9, wherein the outer surface of the front wall is provided with a fastening element (30) configured to releasably fasten a portion of an electrical conductor on or at the housing when the electrical conductor is connected with the electrical interface.

11. A battery module according to any one of claims 9-10, wherein the electrical interface comprises a positive terminal (42) and a negative terminal (41) of or being associated with the one or more battery elements, wherein the battery module further comprises protective covers (44, 43) for the positive terminal and the negative terminal, respectively, which protective covers are configured to be selectively operable for exposing or covering the positive terminal and the negative terminal, respectively.

12. A system (100) comprising:
a battery module (1) according to any one of claims 1-11; and
at least one (20) of: at least one heat sink, at least one heat spreader, and at least one heat exchanger;
wherein an outer surface of the thermal energy transfer element (15) of the battery module is coupled with the at least one heat sink, the at least one heat spreader, and/or the at least one heat exchanger.

13. A system according to claim 12, wherein the thermal energy transfer element is configured so that the outer surface of the thermal energy transfer element is adapted to mate with a surface of the at least one heat sink, the at least one heat spreader, and/or the at least one heat exchanger.

14. A system according to any one of claims 12-13, further comprising:
a fluid flow generator (25) configured to selectively generate the flow of the fluid into the interior space.

15. A system according to any one of claims 12-14, wherein the system comprises a plurality of battery modules according to any one of claims 1-11, and wherein for each battery module of the plurality of battery modules there is a provided a corresponding at least one heat sink, at least one heat spreader, and/or at least one heat exchanger, wherein for each battery module of the plurality of battery modules, the outer surface of the thermal energy transfer element of the battery module is coupled with the corresponding at least one heat sink, at least one heat spreader, and/or at least one heat exchanger.
